# EUROPEAN PATENT APPLICATION

(11) **EP 4 848 036 A1**
(43) Date of publication of application: **02.12.2026**
(21) Application number: 24923272.9
(22) Date of filing: 29.08.2024
(51) Int. Cl.: G06F 1/3206

(54) **POWER CONSUMPTION CONTROL METHOD FOR ARTIFICIAL INTELLIGENCE (AI) SERVER AND RELATED DEVICE**

(30) Priority: 06.02.2024 CN 202410173876
(71) Applicant: Huawei Technologies Co., Ltd., Shenzhen, Guangdong 518129 (CN)
(72) Inventor: MA, Jiantao, Shenzhen, Guangdong 518129 (CN)
(74) Representative: Huawei European IPR
(86) International application number: PCT/CN2024/115346
(87) International publication number: WO 2025/167062

(57) **Abstract**

This application discloses a power consumption control method for an artificial intelligence AI server, including: obtaining a processing phase of an AI model in the AI server, where the AI model includes at least two processing phases, the AI server includes a central processing unit CPU and an accelerator processor, the accelerator processor is configured to train the AI model or perform inference using the AI model, and the CPU is configured to control the accelerator processor to perform AI model training or inference; determining, based on the processing phase of the AI model, a power consumption adjustment policy for the CPU; and adjusting an operating mode of the CPU according to the power consumption adjustment policy. According to the method, a power consumption adjustment policy corresponding to a processing phase of an AI model may be determined based on the processing phase of the AI model, and an operating mode of a CPU is adaptively adjusted according to the power consumption adjustment policy, so that power consumption of the CPU is reduced while performance is ensured, thereby implementing energy consumption optimization for the CPU.

## Description

This application claims priority to Chinese Patent Application No. 202410173876.X, filed with the China National Intellectual Property Administration on February 6, 2024 and entitled "POWER CONSUMPTION CONTROL METHOD FOR ARTIFICIAL INTELLIGENCE (AI) SERVER AND RELATED DEVICE", which is incorporated herein by reference in its entirety.

### TECHNICAL FIELD

This application relates to the field of computer technologies, and in particular, to a power consumption control method for an artificial intelligence (artificial intelligence, AI) server, a power consumption controller for an AI server, an AI server, an AI cluster, a computer-readable storage medium, and a computer program product.

### BACKGROUND

With the continuous development of AI technologies, especially emergence of large models and artificial intelligence generated content (Artificial Intelligence Generated Content, AIGC), AI computing power is growing explosively. A scale of AI clusters from mainstream vendors can usually reach tens of thousands of accelerator processors and is still increasing. This causes a rapid surge in energy consumption of the AI clusters, making electricity costs a major operation and maintenance cost of data centers, accounting for up to 20% of the total cost of ownership (Total Cost of Ownership, TOC) of the data centers.

AI servers in AI clusters serve as the core infrastructure supporting AI computing in intelligent computing. An AI server is a high-performance computer dedicated to processing and analyzing large-scale data and performing tasks such as machine learning and deep learning. Currently, AI servers widely used in the market are generally heterogeneous servers. A heterogeneous server is a server including a central processing unit (central processing unit, CPU) and an accelerator processor. The accelerator processor includes but is not limited to a graphics processing unit (graphics processing unit, GPU), a neural-network processing unit (Neural-Network Processing Unit, NPU), a tensor processing unit (Tensor Processing Unit, TPU), and the like.

General-purpose servers usually rely on CPUs as their primary computing power, while the AI servers usually rely on accelerator processors as their primary computing power. In the AI server, the CPU is responsible for executing compute tasks and processing data and can perform complex algorithmic and model computations, and the accelerator processor provides high-performance parallel computing power to accelerate tasks such as machine learning and deep learning, thereby speeding up model training and inference.

Regarding CPU energy consumption optimization in AI servers, existing approaches may include actively adjusting a frequency when a temperature or current is excessively high, until the temperature and energy consumption reach a stable point. However, the foregoing temperature/current-based control solution is essentially a passive defense measure for ensuring security of AI servers, and it is difficult to achieve optimal performance and energy consumption targets.

### SUMMARY

This application provides a power consumption control method for an AI server. According to the method, a power consumption adjustment policy for a CPU in the AI server may be determined based on a processing phase of an AI model in the AI server, and an operating mode of the CPU is adaptively adjusted according to the power consumption adjustment policy, so that power consumption of the CPU in the AI server in a training process or an inference process is reduced while performance is ensured, thereby implementing energy consumption optimization for the CPU. This application further provides a power consumption controller for an AI server, an AI server, an AI cluster, a computer-readable storage medium, and a computer program product that correspond to the foregoing method.

According to a first aspect, this application provides a power consumption control method for an AI server. The method may be performed by a power consumption controller for the AI server. The power consumption controller for the AI server may be briefly referred to as a power consumption controller. The power consumption controller is configured to implement power consumption optimization for the AI server, for example, optimize power consumption of a CPU in the AI server. The power consumption controller may be deployed in a plurality of manners. In a manner, the power consumption controller may be disposed inside the AI server as an important component of the AI server. In another manner, the power consumption controller may be disposed outside the AI server, for example, deployed in a dedicated control server. In this case, the power consumption controller completes determining and control of operating modes of CPUs in all AI servers connected to the power consumption controller, to optimize power consumption of the CPUs.

Specifically, the power consumption controller may obtain a processing phase of an AI model in the AI server, where the AI model includes at least two processing phases, the AI server includes the CPU and an accelerator processor, the accelerator processor is configured to train the AI model or perform inference using the AI model, and the CPU is configured to control the accelerator processor to perform AI model training or inference. The power consumption controller may determine, based on the processing phase of the AI model, a power consumption adjustment policy for the CPU, and then adjust an operating mode of the CPU according to the power consumption adjustment policy.

In the method, the processing phase of the AI model in the AI server is obtained, the power consumption adjustment policy corresponding to the processing phase is determined, and then the operating mode of the CPU is adaptively adjusted according to the power consumption adjustment policy. In this way, the power consumption of the CPU in the AI server in a training process or an inference process can be reduced while performance is ensured, thereby implementing energy consumption optimization for the CPU. This method is applicable to different AI applications, is highly practical, and reduces overall operation and maintenance costs of an AI cluster in a data center.

In some possible implementations, the power consumption controller may obtain a training phase or an inference phase of the AI model in a plurality of manners. In a manner, the power consumption controller obtains the processing phase of the AI model reported by the CPU or the accelerator processor. In another manner, the power consumption controller obtains a state of the accelerator processor, and determines, based on the state of the accelerator processor, the processing phase of the AI model.

This method supports obtaining the processing phase of the AI model in different manners, and adaptively adjusting, based on the processing phase, the operating mode of the CPU in the AI server, thereby implementing energy consumption optimization for the CPU while ensuring the performance. In addition, the method supports identifying the training phase or the inference phase in a plurality of manners, and has high availability.

In some possible implementations, the AI model in the AI server may be a training model, and correspondingly, a processing phase of the training model includes an idle phase, a training startup phase, a stable training phase, or a validation phase. In the idle phase and the training startup phase, utilization of the accelerator processor is low, and adjusting the operating mode of the CPU has small impact on the performance. In the stable training phase and the validation phase, the utilization of the accelerator processor is high, and adjusting the operating mode of the CPU may have impact on the performance. Therefore, the processing phase of the AI model is divided into the foregoing phases, and power consumption adjustment policies corresponding to different phases are used to adjust the operating mode of the CPU, so that optimal performance and energy consumption targets can be achieved.

In some possible implementations, the AI model in the AI server may be an inference model, and correspondingly, a processing phase of the inference model includes an idle phase, an inference startup phase, or a stable inference phase. In the idle phase and the inference startup phase, the utilization of the accelerator processor is low, and adjusting the operating mode of the CPU has small impact on the performance. In the stable inference phase, the utilization of the accelerator processor is high, and adjusting the operating mode of the CPU may have impact on the performance. Therefore, the processing phase of the AI model is divided into the foregoing phases, and power consumption adjustment policies corresponding to different phases are used to adjust the operating mode of the CPU, so that optimal performance and energy consumption targets can be achieved.

It should be noted that the foregoing phases are merely an example division manner. In another possible implementation of this embodiment of this application, another division manner may alternatively be used. For example, the inference startup phase is short in duration, and may be combined with the stable inference phase into one phase, for example, an inference in progress phase or an inference running phase.

In some possible implementations, when the processing phase is the stable training phase or the validation phase, or when the processing phase is the stable inference phase, the power consumption controller may obtain a state of the accelerator processor, and determine, based on the state of the accelerator processor, the power consumption adjustment policy for the CPU.

In the stable training phase or the validation phase, the accelerator processor is performing model training, and when the inference phase is the stable inference phase, the accelerator processor is performing model inference. Therefore, to avoid impact of adjusting the operating mode of the CPU on service performance, in this application, the state of the accelerator processor is obtained, the power consumption adjustment policy for the CPU is determined based on the state of the accelerator processor, and the operating mode of the CPU is adjusted according to the power consumption adjustment policy. In this way, the operating mode of the CPU can be coordinated with the state of the accelerator processor, allowing the power consumption of the CPU in the AI server in the training process or the inference process to be reduced by merely observing external characteristics of the accelerator processor, without directly sensing a training service or an inference service, thereby implementing energy consumption optimization for the CPU while ensuring performance.

In some possible implementations, when it is determined that the state of the accelerator processor is a first state, the power consumption controller determines, based on the first state, that the power consumption adjustment policy for the CPU is a first policy; or when it is determined that the state of the accelerator processor is a state other than the first state, the power consumption controller obtains a state of the CPU, where the CPU includes a plurality of states, and then determines, based on the state of the CPU, that the power consumption adjustment policy for the CPU is a second policy. The state other than the first state is any other state distinct from the first state, including but not limited to a second state. In actual application, the state other than the first state may further include more other states, for example, a third state. The first state, the second state, and the third state may be different states classified based on load, utilization, or temperature of the accelerator processor.

According to the method, for different states of the accelerator processor, different power consumption adjustment policies are used to adaptively adjust the operating mode of the CPU, so that effect of energy consumption optimization for the CPU can be further enhanced.

In some possible implementations, when the processing phase is the idle phase or the training startup phase, or when the processing phase is the idle phase or the inference startup phase, the power consumption controller may further obtain the state of the CPU, and determine, based on the state of the CPU, the power consumption adjustment policy for the CPU.

In the idle phase, the training startup phase, or the inference startup phase, the utilization of the accelerator processor is low, and adjusting the operating mode of the CPU has small impact on performance of a service run by the accelerator processor. Therefore, the power consumption controller determines, based on the state of the CPU, the power consumption adjustment policy, thereby maximizing a benefit of power consumption optimization.

In some possible implementations, the state of the CPU is classified based on load of the CPU and a degree of busyness of the CPU, the load indicates a quantity of tasks executed by the CPU per unit time, and the degree of busyness indicates utilization of the CPU during task execution. According to the method, the state of the CPU is classified based on the load of the CPU and the degree of busyness of the CPU, so that fine-grained adjustment of the operating mode of the CPU can be implemented, thereby increasing benefits of energy consumption optimization for the CPU.

According to a second aspect, this application provides a power consumption controller for an AI server. The power consumption controller includes:
a phase obtaining module, configured to obtain a processing phase of an AI model in the AI server, where the AI model includes at least two processing phases, the AI server includes a central processing unit CPU and an accelerator processor, the accelerator processor is configured to train the AI model or perform inference using the AI model, and the central processing unit is configured to control the accelerator processor to perform AI model training or inference;
a policy determining module, configured to determine, based on the processing phase of the AI model, a power consumption adjustment policy for the CPU; and
a mode adjustment module, configured to adjust an operating mode of the CPU according to the power consumption adjustment policy.

In some possible implementations, the phase obtaining module is specifically configured to:
obtain the processing phase of the AI model reported by the CPU or the accelerator processor; or
obtain a state of the accelerator processor, and determine, based on the state of the accelerator processor, the processing phase of the AI model.

In some possible implementations, when the AI model is a training model, the processing phase includes an idle phase, a training startup phase, a stable training phase, or a validation phase; or when the AI model is an inference model, the processing phase includes an idle phase, an inference startup phase, or a stable inference phase.

In some possible implementations, the policy determining module is specifically configured to:
when the processing phase is the stable training phase or the validation phase, or when the processing phase is the stable inference phase, obtain the state of the accelerator processor; and
determine, based on the state of the accelerator processor, the power consumption adjustment policy for the CPU.

In some possible implementations, the policy determining module is specifically configured to:
when it is determined that the state of the accelerator processor is a first state, determine, based on the first state, that the power consumption adjustment policy for the CPU is a first policy; or
when it is determined that the state of the accelerator processor is a state other than the first state, obtain a state of the CPU, where the CPU includes a plurality of states, and determine, based on the state of the CPU, that the power consumption adjustment policy for the CPU is a second policy.

In some possible implementations, the policy determining module is specifically configured to:
when the processing phase is the idle phase or the training startup phase, or when the processing phase is the idle phase or the inference startup phase, obtain the state of the CPU; and
determine, based on the state of the CPU, the power consumption adjustment policy for the CPU.

In some possible implementations, the state of the CPU is classified based on load of the CPU and a degree of busyness of the CPU, the load indicates a quantity of tasks executed by the CPU per unit time, and the degree of busyness indicates utilization of the CPU during task execution.

In some possible implementations, the power consumption controller is deployed in the AI server, or the power consumption controller is deployed in a control server outside the AI server. The power consumption controller is deployed in the AI server, so that a communication link can be shortened, and communication latency can be reduced, thereby implementing timely adjustment of the operating mode of the CPU, to meet a power consumption optimization requirement. The power consumption controller is deployed in a control server outside the AI server, so that one control server can perform unified power consumption control on a plurality of AI servers. In this way, complexity of the AI server can be reduced, and robustness can be improved. In addition, a cost increase caused by deploying the power consumption controller in each AI server can be avoided.

According to a third aspect, this application provides a power consumption controller. The power consumption controller includes a processor and a memory. The processor is configured to execute instructions stored in the memory, so that the power consumption controller performs the power consumption control method for an AI server according to any one of the first aspect or the implementations of the first aspect.

According to a fourth aspect, this application provides an AI server. The AI server may include a power consumption controller, a CPU, and an accelerator processor. The power consumption controller may execute instructions to perform the power consumption control method for an AI server according to any one of the first aspect or the implementations of the first aspect, to implement energy consumption optimization for the CPU in the AI server.

According to a fifth aspect, this application provides an AI cluster. The AI cluster includes at least one AI server. The AI server may include a power consumption controller, a CPU, and an accelerator processor. The power consumption controller may execute instructions to perform the power consumption control method for an AI server according to any one of the first aspect or the implementations of the first aspect, to implement energy consumption optimization for the CPU in the AI server.

According to a sixth aspect, this application provides an AI cluster. The AI cluster includes a control server and at least one AI server. The control server includes a power consumption controller, and the AI server includes a CPU and an accelerator processor. The power consumption controller is connected to at least one AI server. The power consumption controller may execute instructions to perform the power consumption control method for an AI server according to any one of the first aspect or the implementations of the first aspect, to implement energy consumption optimization for the CPU in the at least one AI server connected to the power consumption controller.

According to a seventh aspect, this application provides a computer-readable storage medium. The computer-readable storage medium stores instructions, where the instructions instruct a compute device or a compute device cluster to perform the power consumption control method for an AI server according to any one of the first aspect or the implementations of the first aspect.

According to an eighth aspect, this application provides a computer program product including instructions. When the computer program product runs on a compute device or a compute device cluster, the compute device or the compute device cluster is caused to perform the power consumption control method for an AI server according to any one of the first aspect or the implementations of the first aspect.

Based on the implementations provided in the foregoing aspects, this application may further combine technologies in this application to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram showing distribution of utilization of a CPU and an accelerator processor of an AI server in a training process according to this application;
FIG. 2 is a diagram of deployment of a power consumption controller according to this application;
FIG. 3 is a diagram of deployment of another power consumption controller according to this application;
FIG. 4 is a flowchart of a power consumption control method according to this application;
FIG. 5 is a diagram of different phases in a model training scenario according to this application;
FIG. 6 is a diagram of power consumption distribution of an AI server according to this application;
FIG. 7 is a diagram of a structure of a power consumption controller according to this application;
FIG. 8 is a diagram of a structure of a compute device according to this application; and
FIG. 9 is a diagram of a structure of a compute device cluster according to this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Artificial intelligence (artificial intelligence, AI) server is a high-performance computer specially designed for artificial intelligence applications. The AI server uses an advanced hardware architecture to quickly process large-scale data and complex compute tasks, to meet requirements of the AI applications for compute resources.

The hardware architecture of the AI server is usually a heterogeneous architecture. The heterogeneous architecture may be a hybrid architecture of a central processing unit (central processing unit, CPU) and an accelerator processor. The accelerator processor, also referred to as an accelerator or an accelerator card, is a processor that can accelerate a compute task, and includes but is not limited to a graphics processing unit (graphics processing unit, GPU), a neural-network processing unit (Neural-Network Processing Unit, NPU), and a tensor processing unit (tensor processing unit, TPU). Processing units such as the CPU, the GPU, the NPU, and the TPU may be collectively referred to as an XPU.

Different from a general-purpose server that relies on the CPU as computing power, the AI server mainly relies on the accelerator processor as computing power. The CPU is responsible for executing compute tasks and processing data, and can perform complex algorithmic and model computations. The accelerator processor provides high-performance parallel computing power to accelerate compute tasks such as machine learning and deep learning, thereby speeding up model training and inference. Although energy consumption of the accelerator processor accounts for a larger proportion of overall energy consumption of the AI server compared with that of the CPU, the energy consumption of the CPU is also an important and non-negligible component of the overall energy consumption of the AI server. Reducing the energy consumption of the CPU in the AI server also brings considerable cost benefits to an AI cluster.

Currently, an energy consumption optimization solution for a CPU in an AI server includes a temperature/current-based control solution. Specifically, the CPU may run at a default frequency. When a temperature/current is excessively high, a control system actively adjusts the frequency until the temperature and energy consumption reach a stable point. This solution is essentially an overcurrent protection/overtemperature protection, and aims to ensure safety of the AI server and prevent the AI server from going down due to the temperature or current exceeding a corresponding limit. Consequently, it is difficult to achieve optimal performance and energy consumption targets. For example, when load and a current are high in a specific time period, reducing a frequency by the control system may slow down an inference speed, which greatly affects performance of the AI server.

Based on this, the industry further provides an energy consumption optimization solution for a CPU based on performance prediction. In the energy consumption optimization solution for a CPU based on performance prediction, a frequency of the CPU is dynamically managed in a performance prediction manner, to reduce power consumption of the CPU, thereby reducing energy consumption of the CPU. Specifically, a model training scenario is used as an example for description. In a model training process, the control system acquires a signal related to system load, for example, utilization of the CPU, to calculate current system load and predict performance required by the AI server in a next time period, and then converts the predicted performance into a frequency required by the CPU, to adjust settings such as a frequency of a CPU chip.

However, the foregoing solution based on performance prediction requires modeling and analysis of a computational process, which needs a deep dive into an AI computational process. In actual application, due to diversity of AI applications, each AI application requires an optimal performance prediction algorithm to support the AI application. It is difficult to generalize a performance prediction algorithm from one AI application to another. As a result, it is difficult to achieve optimal benefits.

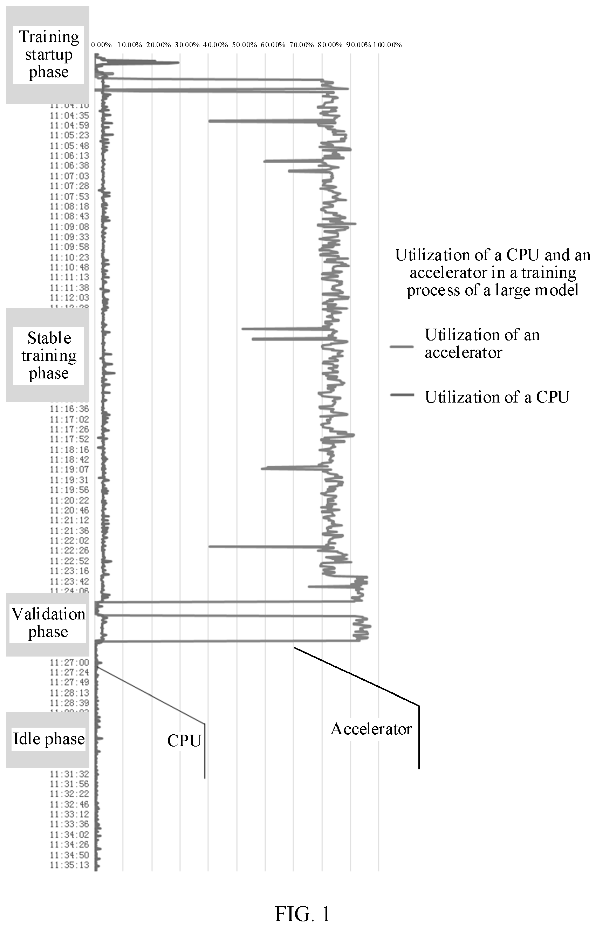

By monitoring real-time resource utilization of AI servers in training processes of a plurality of large models, the inventor of this application finds that CPU utilization and an accelerator processor of the AI server in the training process exhibits significant characteristics shown in FIG. 1:
1. In a training startup phase, the utilization of the CPU increases instantaneously, and the utilization of the accelerator processor is low;
2. In a stable training phase and a validation phase, the utilization of the CPU is low, and the utilization of the accelerator processor is high;
3. In an idle (Idle) phase, both the utilization of the CPU and the utilization of the accelerator processor is low.

In view of this, this application provides a power consumption control method. In the method, a processing phase of an AI model in an AI server is obtained, a power consumption adjustment policy corresponding to the processing phase may be determined based on the processing phase of the AI model, and then an operating mode of a CPU is adaptively adjusted according to the power consumption adjustment policy. In this way, power consumption of the CPU in the AI server in a training process or an inference process can be reduced as much as possible while performance is ensured, thereby implementing energy consumption optimization for the CPU. This method is applicable to different AI applications, is highly practical, and reduces overall operation and maintenance costs of an AI cluster in a data center.

The power consumption control method in this application may be applied to a model training scenario or a model inference scenario. In the model training scenario, the AI model may be a training model. In the model inference scenario, the AI model may be an inference model. The inference model may be a model that has been trained in the training scenario. It should be noted that the AI model may be a large model. The large model in this application is a model with a massive quantity of parameters, for example, a model with a parameter scale of hundreds of billions, trillions, or more. In some examples, the large model may include a generative pre-trained transformer (Generative Pre-trained Transformer, GPT), such as a GPT for chat. In some examples, the AI model in the model training scenario or the model inference scenario may alternatively be another model other than the large model, for example, a small model with 10 billion parameters or a small model with a parameter scale below 10 billion.

The power consumption control method for an AI server in this application may be performed by a power consumption controller for the AI server. For ease of description, the power consumption controller for the AI server may also be briefly referred to as a power consumption controller. The power consumption controller is configured to complete determining and control of the operating mode of the CPU in the AI server. The power consumption controller may be implemented by using software or hardware.

The power consumption controller may include a plurality of deployment manners. The following separately provides descriptions with reference to the accompanying drawings.

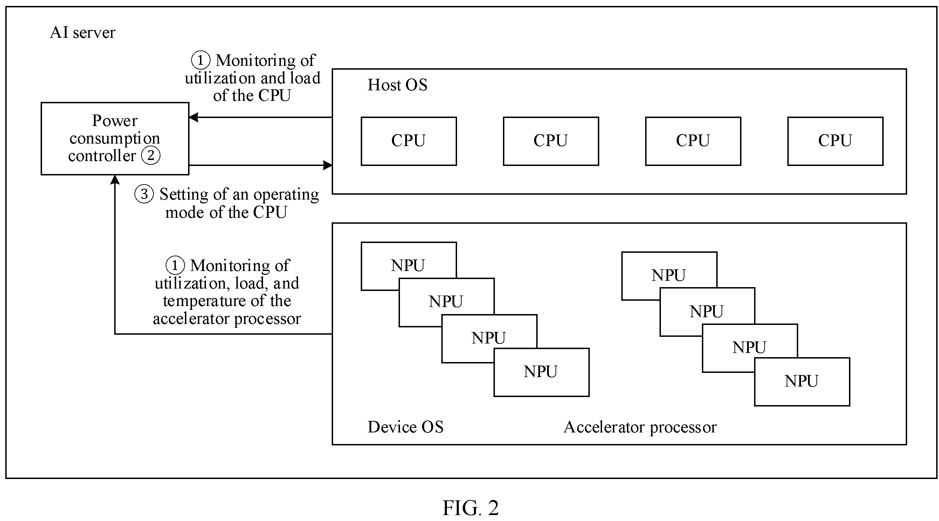

In a deployment manner, the power consumption controller may be deployed in an AI server as a built-in component of the AI server, and completes determining and control of an operating mode of a CPU in the host AI server in which the power consumption controller is located. Refer to a diagram of deployment of a power consumption controller shown in FIG. 2. The power consumption controller is deployed in an AI server. The AI server includes the power consumption controller, at least one CPU on a host (host) side, and at least one accelerator processor on a device (device) side. The accelerator processor may be, for example, an NPU. Operating systems (operating systems, OS) are deployed on the host side and the device (device) side. The power consumption controller may obtain a state of the accelerator processor based on utilization, load, or temperature of the accelerator processor collected by the device OS, and may obtain a processing phase of the AI model in the AI server based on the state of the accelerator processor. The power consumption controller may determine, based on the processing phase of the AI model, a power consumption adjustment policy for the CPU. In some cases, the power consumption controller may further obtain a state of the CPU, for example, obtain the state of the CPU based on utilization (also referred to as usage) and load of the CPU collected by the host OS, and determine, based on the state of the CPU, the power consumption adjustment policy for the CPU. The power consumption controller may adjust the operating mode of the CPU according to the power consumption adjustment policy. For example, the power consumption controller may determine a parameter of the operating mode according to the power consumption adjustment policy, and set the operating mode of the CPU based on the parameter.

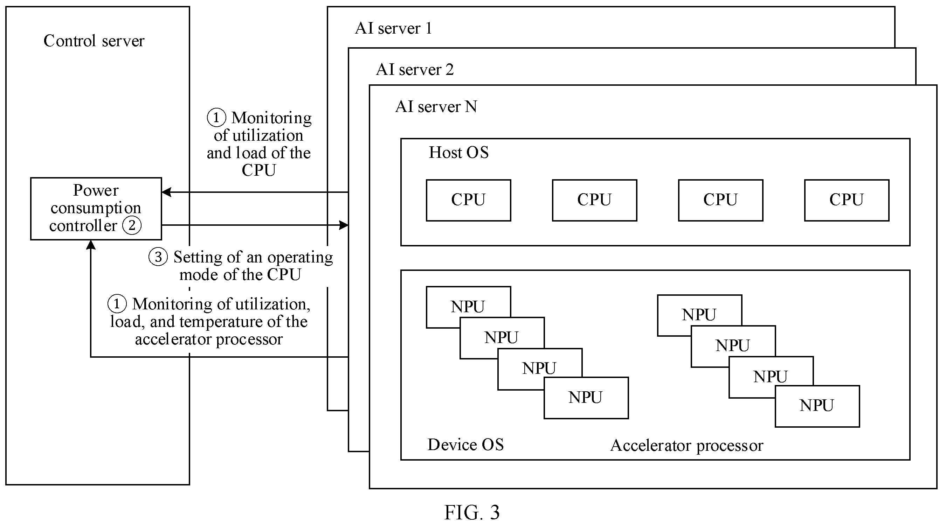

In another deployment manner, the power consumption controller may be deployed outside an AI server, for example, deployed in a dedicated control server, and completes determining and control of operating modes of CPUs in all AI servers connected to the power consumption controller. Refer to a diagram of deployment of another power consumption controller shown in FIG. 3. The power consumption controller is deployed in a control server, and is connected to at least one AI server, for example, an AI server 1, an AI server 2, ..., and an AI server N. One of the AI servers is used as an example for description. The AI server includes at least one CPU on a host side and at least one accelerator processor on a device side. OSs are deployed on the host side and the device side, specifically a host OS and a device OS. The power consumption controller may obtain a state of the accelerator processor based on utilization, load, or temperature of the accelerator processor collected by the device OS, and may obtain a processing phase of the AI model in the AI server based on the state of the accelerator processor. The power consumption controller may determine, based on the processing phase of the AI model, a power consumption adjustment policy for the CPU. The power consumption controller may further obtain a state of the CPU based on utilization and load of the CPU collected by the host OS, and determine, based on the state of the CPU, the power consumption adjustment policy for the CPU. The power consumption controller may adjust the operating mode of the CPU according to the power consumption adjustment policy.

It should be noted that, in FIG. 2 and FIG. 3, an example in which the power consumption controller obtains the state of the accelerator processor, and determines, based on the state of the accelerator processor, the processing phase of the AI model is used for description. In actual application, the power consumption controller may alternatively receive the processing phase of the AI model reported by the CPU or the accelerator processor. The CPU and the accelerator processor may determine, based on the state of the accelerator processor, the processing phase of the AI model, and report the processing phase of the AI model to the power consumption controller.

To make the technical solutions of this application clearer and easier to understand, the following describes a power consumption control method for an AI server in this application with reference to the accompanying drawings.

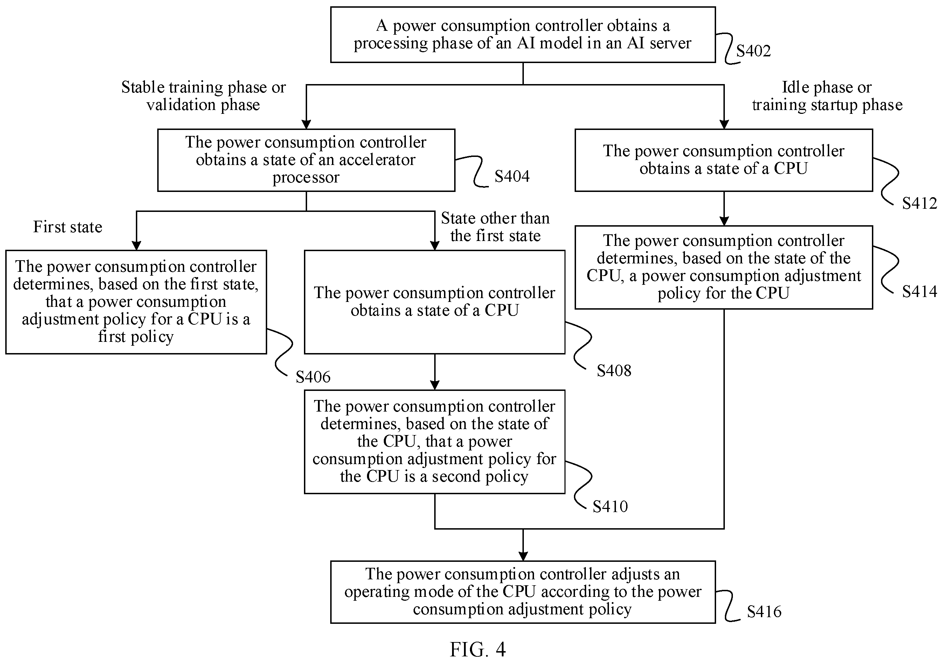

Refer to a flowchart of a power consumption control method for an AI server shown in FIG. 4. The method is described by using a model training scenario as an example, and specifically includes the following steps.

S402: A power consumption controller obtains a processing phase of an AI model in an AI server. When the processing phase is a stable training phase or a validation phase, S404 is performed. When the processing phase is an idle phase or a training startup phase, S412 is performed.

In a model training scenario, the AI model may be a training model, and the training model may be a large model with hundreds of billions or trillions of parameters, or a small model with fewer than one hundred billion parameters. The AI model includes at least two processing phases. The processing phase of the AI model may reflect an operating state of the AI server, and therefore may be used to control power consumption of the AI server.

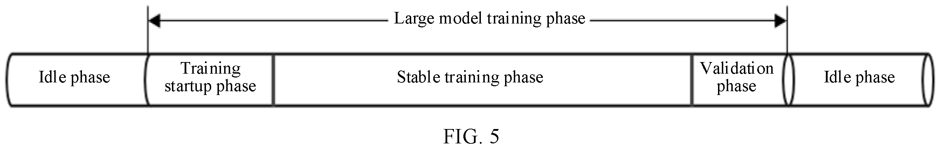

Specifically, refer to FIG. 5. In the model training scenario, the processing phase of the AI model may be divided into an idle (Idle) phase and a training phase. The training phase may be further divided into a training startup phase, a stable training phase, and a validation phase.

Considering that a state of an accelerator processor may vary in different processing stages, the processing stage of the AI model may be determined based on the state of the accelerator processor. The state of the accelerator processor may be characterized by at least one of load, utilization, or temperature of the accelerator processor.

The power consumption controller may determine the processing phase of the AI model in a plurality of manners. The following separately provides descriptions.

In a first manner, the power consumption controller autonomously determines the processing phase of the AI model. Specifically, the power consumption controller may obtain a state of the accelerator processor, and then determines, based on the state of the accelerator processor, the processing phase of the AI model. The state of the accelerator processor may be characterized by at least one of the utilization, load, or temperature of the accelerator processor. The utilization of the accelerator processor is utilization of the accelerator processor during task execution. The load of the accelerator processor indicates a quantity of tasks executed by the accelerator processor per unit time. The load of the accelerator processor may be average load of the accelerator processor.

For ease of understanding, an example in which the processing phase of the AI model is determined based on the utilization of the accelerator processor is used for description in this application. For example, when the utilization of the accelerator processor is less than a first value, the power consumption controller determines that the AI model is in the idle phase or the training startup phase; or when the utilization of the accelerator processor is greater than or equal to a first value, the power consumption controller determines that the AI server is in the stable training phase or the validation phase. The first value may be set based on experience. For example, the first value may be set to 10%. It should be noted that the first value may be further adjusted in a power consumption control process.

In another possible implementation of this embodiment of this application, the power consumption controller may alternatively determine, based on the load or temperature of the accelerator processor, the processing phase of the AI model. Alternatively, the power consumption controller may determine, based on a combination of the utilization, load, or temperature of the accelerator processor, the processing phase of the AI model.

There may be a plurality of implementations of monitoring indicators such as the utilization, load, and temperature of the accelerator processor in real time. An implementation is routine inspection. Specifically, the power consumption controller may periodically and actively query the utilization, load, or temperature of the accelerator processor from an OS running on the accelerator processor. Another implementation is rapid reporting. Specifically, a limit may be set for a monitored indicator. When detecting that the indicator goes beyond the limit (the indicator exceeds the limit), an OS running on the accelerator processor actively reports the indicator to the power consumption controller, for example, reports the utilization, load, or temperature of the accelerator processor.

In a second manner, the power consumption controller receives the processing phase of the AI model reported by a CPU or the accelerator processor. An example in which the accelerator processor reports the processing phase of the AI model is used for description. An OS running on the accelerator processor may obtain a state of the accelerator processor, for example, utilization, load, or temperature of the accelerator processor, determine, based on the utilization, load, or temperature, the processing phase of the AI model, and then report the processing phase of the AI model to the power consumption controller. For specific implementation of determining, based on the utilization, load, or temperature of the accelerator processor, the processing phase of the AI model by the accelerator processor (or the OS running on the accelerator processor), refer to related content descriptions of determining, based on the state of the accelerator processor, the processing phase of the AI model by the power consumption controller. Details are not described herein again.

S404: The power consumption controller obtains a state of the accelerator processor. When the state of the accelerator processor is a first state, S406 is performed. When the state of the accelerator processor is a state other than the first state, S408 to S410 are performed.

The processing phase is the stable training phase or the validation phase, indicating that the accelerator processor is performing model training or validating a trained model. To avoid affecting performance, the power consumption controller may obtain a state of the accelerator processor, so as to adjust, based on the state of the accelerator processor, an operating mode of the CPU, thereby optimizing power consumption of the CPU while ensuring performance of the AI server.

The power consumption controller may determine, based on different states of the accelerator processor, a power consumption adjustment policy in different manners. The state other than the first state is another state other than the first state, and includes but is not limited to a second state. In actual application, the state other than the first state may further include more other states, for example, a third state. The first state, the second state, and the third state may be different states classified based on load, utilization, or temperature of the accelerator processor.

Specifically, when the state of the accelerator processor is the first state, the power consumption controller performs S406 to determine that a power consumption policy for the CPU is a first policy. When the state of the accelerator processor is the state other than the first state, for example, the second state, the power consumption controller performs S408 to S410 to determine that a power consumption adjustment policy for the CPU is a second policy.

In some examples, the first state may be that a difference between the utilization of the accelerator processor and previous utilization of the accelerator processor (for example, utilization of the accelerator processor in a previous cycle) is less than a first threshold, and the second state may be that the utilization of the accelerator processor is greater than or equal to the first threshold. The first threshold is less than 0, and may be set based on experience. For example, the first threshold may be set to -10%.

In some possible implementations, the second state may be that the utilization of the accelerator processor is greater than or equal to the first threshold, and a difference between the temperature of the accelerator processor and a limit is less than a second threshold. The second threshold may be set based on experience, for example, may be set to -2 degrees Celsius (°C). In this case, the accelerator processor may further include the third state. The third state may be that the difference between the utilization of the accelerator processor and the previous utilization of the accelerator processor is greater than or equal to the first threshold, and the temperature of the accelerator processor is greater than or equal to the limit.

It should be noted that, if the power consumption controller has obtained the state of the accelerator processor when determining the training phase of the AI model, the power consumption controller does not need to repeatedly obtain the state of the accelerator processor. If the power consumption controller receives the training phase of the AI model reported by the CPU or the accelerator processor, the power consumption controller may obtain the state of the accelerator processor.

S406: The power consumption controller determines, based on the first state, that the power consumption adjustment policy for the CPU is a first policy.

The first state includes that the difference between the utilization of the accelerator processor and the previous utilization of the accelerator processor is less than the first threshold, indicating that the utilization of the accelerator processor decreases sharply, and the power consumption controller may determine that the power consumption adjustment policy for the CPU is restoring the operating mode of the CPU to a previously backed-up operating mode. In this case, the first policy may be to adjust the operating mode of the CPU to the previously backed-up operating mode.

S408: The power consumption controller obtains a state of the CPU.

The second state includes that the difference between the utilization of the accelerator processor and the previous utilization of the accelerator processor is greater than or equal to the first threshold. Further, the second state may be that the difference between the utilization of the accelerator processor and the previous utilization of the accelerator processor is greater than or equal to the first threshold, and the difference between the temperature of the accelerator processor and the limit is less than the second threshold. The difference in utilization being greater than or equal to the first threshold indicates that the utilization of the accelerator processor does not decrease sharply, and the difference between the temperature of the accelerator processor and the limit being less than the second threshold indicates that the temperature of the accelerator processor does not exceed the limit, and will not immediately exceed the limit. Therefore, the power consumption controller may obtain the state of the CPU, to determine the power consumption adjustment policy for the CPU.

The state of the CPU may be classified based on load of the CPU and a degree of busyness of the CPU. The load indicates a quantity of tasks executed by the CPU per unit time, and may also be referred to as average load based on this. Further, the load may be further normalized. For example, the power consumption controller may normalize the average load of the CPU periodically (for example, on a cycle of one second). Normalized load = Average load of CPU/Quantity of active cores of CPU. The active core means a CPU core in an active state. The degree of busyness indicates utilization of the CPU during task execution.

Varying load of the CPU may correspond to a varying degree of overload, and varying utilization of the CPU may correspond to a varying degree of busyness. The power consumption controller may classify a level of a degree of overload of the CPU based on the load of the CPU, and classify a level of a degree of busyness of the CPU based on the utilization (for example, average utilization) of the CPU. For example, each level of the degree of overload is configured with a respective limit, and the power consumption controller may compare the load with a limit of at least one level of the degree of overload, to determine the level of the degree of overload. Similarly, each level of the degree of busyness is configured with a respective limit, and the power consumption controller may compare the utilization of the CPU with a limit of at least one level of the degree of busyness, to determine the level of the degree of busyness.

In some examples, the degree of overload may include the following levels: normally loaded, slightly overloaded, moderately overloaded, and severely overloaded. A value range of a normalized load corresponding to normally loaded is [0, 0.7], a value range of a normalized load corresponding to slightly overloaded is (0.7, 1], a value range of a normalized load corresponding to moderately overloaded is (1, 5], and a value range of a normalized load corresponding to severely overloaded is > 5. Similarly, the degree of busyness may include the following levels: idle, normal, slightly busy, and severely busy. A value range of average utilization of the CPU corresponding to idle is [0%, 5%), a value range of average utilization of the CPU corresponding to normal is [5%, 75%), a value range of average utilization of the CPU corresponding to slightly busy is [75%, 95), and a value range of average utilization of the CPU corresponding to severely busy is [95%, 100%].

Based on this, the state of the CPU may be characterized by at least one of the level of the degree of overload and the level of the degree of busyness.

S410: The power consumption controller determines, based on the state of the CPU, that the power consumption adjustment policy for the CPU is a second policy.

Specifically, the power consumption controller may determine, based on the state of the CPU and a mapping relationship between the level of the degree of overload or the level of the degree of busyness in the stable training phase or the validation phase and the power consumption adjustment policy, that the power consumption adjustment policy for the CPU is the second policy.

The mapping relationship between the level of the degree of overload or the level of the degree of busyness in the stable training phase or the validation phase and the power consumption adjustment policy is described as follows:
if the degree of busyness is a first level, for example, idle or normal, the power consumption adjustment policy for the CPU may be to take a CPU core of the CPU offline or to reduce an operating frequency of the CPU. To avoid affecting performance, the power consumption adjustment policy may be to prioritize adjusting a quantity of active cores, and to consider adjusting the operating frequency only after the quantity of active cores reaches a minimum quantity (for example, a limit like a minimum quantity of active cores). For example, when a quantity of CPU cores in an active state is greater than a specified quantity, the power consumption adjustment policy is to take the CPU core of the CPU offline until the quantity of CPU cores in the active state is less than or equal to the specified quantity; or when a quantity of CPU cores in an active state is less than or equal to a specified quantity, the power consumption adjustment policy is to reduce the operating frequency of the CPU to a minimum operating frequency. The specified quantity may be set based on experience. In some examples, when the CPU has 32 or 64 cores, the specified quantity may be 8.

Further, when the first level is idle, the power consumption adjustment policy for the CPU may be to take a first quantity of CPU cores offline or to reduce the operating frequency of the CPU by a first step. When the first level is normal, the power consumption adjustment policy for the CPU may be to take a second quantity of CPU cores offline or to reduce the operating frequency of the CPU by a second step. The first quantity is greater than the second quantity, and the first step is greater than the second step. The first quantity, the second quantity, the first step, and the second step may be set according to an empirical value. For example, when the CPU has 32 or 64 cores, the first quantity may be 2, the second quantity may be 1, the first step may be 2 step units, and the second step may be 1 step unit.

If the degree of busyness is a second level, and the degree of overload is also a second level, the power consumption adjustment policy for the CPU may be to increase an operating frequency of the CPU or to bring an operating mode of a CPU core of the CPU online. The second level of the degree of busyness may include slightly busy or severely busy, and the second level of the degree of overload may include moderately overloaded or severely overloaded.

When the degree of busyness is severely busy, and the degree of overload is moderately overloaded or severely overloaded, the power consumption adjustment policy for the CPU may be to bring a maximum quantity of CPU cores of the CPU online, and to increase the operating frequency of the CPU to a maximum operating frequency.

When the degree of busyness is slightly busy, and the degree of overload is moderately overloaded, the power consumption adjustment policy for the CPU may be to bring a first proportion of offline CPU cores online or to increase the operating frequency of the CPU by a third step. When the degree of busyness is slightly busy, and the degree of overload is severely overloaded, the power consumption adjustment policy for the CPU may be to bring a second proportion of offline CPU cores online or to increase the operating frequency of the CPU by a fourth step. The first proportion is less than the second proportion, and the third step is less than the fourth step. The first proportion, the second proportion, the third step, and the fourth step may be set based on experience. For example, when the CPU has 32 or 64 cores, the first proportion may be 1/4, the second proportion may be 1/2, the first step may be 8 step units, and the second step may be 16 step units.

When the degree of busyness is the second level, and the degree of overload is also the second level, the power consumption adjustment policy for the CPU may be to prioritize increasing the operating frequency, and then to consider bringing the CPU core online. Specifically, the power consumption adjustment policy for the CPU may be to increase the operating frequency of the CPU to a maximum operating frequency. When the CPU is at the maximum operating frequency, the power consumption adjustment policy for the CPU may be to bring CPU cores of the CPU online until a quantity of CPU cores in an active state reaches a maximum quantity.

In some possible implementations, if the degree of overload is a first level, for example, normally loaded or slightly overloaded, and the degree of busyness is the second level, for example, slightly busy or severely busy, the power consumption adjustment policy for the CPU may be to maintain a previous operating mode. It should be noted that, when the difference between the utilization of the accelerator processor and the previous utilization of the accelerator processor is greater than or equal to the first threshold, and the difference between the temperature of the accelerator processor and the limit is greater than or equal to the second threshold and is less than zero, it indicates that the temperature is about to exceed the limit, and the power consumption adjustment policy for the CPU may alternatively be to maintain a current operating mode.

In some possible implementations, the state of the accelerator card may be a third state. The third state may be that the difference between the utilization of the accelerator processor and the previous utilization of the accelerator processor is greater than or equal to the first threshold, and the temperature of the accelerator processor is greater than or equal to the limit, indicating that the temperature has exceeded the limit. The power consumption controller may determine that the power consumption adjustment policy for the CPU is to take a CPU core of the CPU offline or to reduce the operating frequency of the CPU.

A quantity of CPU cores to be taken offline and a step by which the operating frequency is to be reduced may be set based on experience. In some examples, the state of the CPU may further include a quantity of remaining active cores, briefly referred to as remaining active cores. If the quantity of remaining active cores is greater than a specified quantity, the power consumption adjustment policy may be to take active cores of the CPU offline until only the specified quantity of active cores are left. If the quantity of remaining active cores is not greater than a specified quantity, the power consumption adjustment policy may be to reduce the operating frequency of the CPU to a minimum operating frequency. The specified quantity may be set based on experience. For example, in a 32-core or 64-core scenario, the specified quantity may be 8. A quantity of CPU cores to be taken offline and a step by which the operating frequency of the CPU is to be reduced may be set based on experience. For example, the quantity of CPU cores to be taken offline may be 2, and the step by which the operating frequency is to be reduced may be 2 step units.

S412: The power consumption controller obtains a state of the CPU.

If the training phase is the idle phase or the training startup phase, it indicates that the accelerator processor does not perform model training, or just starts model training. In this case, the power consumption controller adjusts the operating mode of the CPU, which has small impact on the performance of the AI server. Based on this, the power consumption controller may obtain the state of the CPU, to adjust the operating mode of the CPU based on the state of the CPU, thereby optimizing the power consumption of the CPU as much as possible.

For specific implementation of obtaining the state of the CPU by the power consumption controller, refer to the related content descriptions in S408. Details are not described herein again.

S414: The power consumption controller determines, based on the state of the CPU, the power consumption adjustment policy for the CPU.

Specifically, if a difference between current load (for example, current average load) of the CPU and previous load (for example, previous average load) of the CPU is greater than a third threshold, the power consumption controller may determine that the power consumption adjustment policy for the CPU is to bring a maximum quantity of CPU cores of the CPU online, and to increase the operating frequency of the CPU to a maximum operating frequency. The third threshold may be set based on experience. In some examples, the third threshold may be set to 2. In this case, the power consumption adjustment policy may be to bring all CPU cores online at once, and to adjust the operating frequency of the CPU to the maximum operating frequency at once. Otherwise, the power consumption controller may determine the power consumption adjustment policy for the CPU based on the state of the CPU and a mapping relationship between the level of the degree of overload or the level of the degree of busyness in the idle phase or the training startup phase and the power consumption adjustment policy.

The mapping relationship between the level of the degree of overload or the level of the degree of busyness in the idle phase or the training startup phase and the power consumption adjustment policy is described as follows:
if the degree of busyness is a first level, for example, idle or normal, the power consumption adjustment policy may be to reduce an operating frequency of the CPU or to take a CPU core of the CPU offline. In the idle phase or the training startup phase, the power consumption adjustment policy may be to prioritize adjusting the operating frequency, and to consider adjusting a quantity of CPU cores only after the operating frequency reaches a minimum operating frequency. For example, the power consumption controller may determine that the power consumption adjustment policy for the CPU is to reduce the operating frequency of the CPU. If the operating frequency of the CPU reaches the minimum operating frequency, the power consumption controller may determine that the power consumption adjustment policy for the CPU is to take the CPU core of the CPU offline until a quantity of CPU cores in an active state reaches a minimum quantity.

Further, when the first level is idle, the power consumption controller may determine that the power consumption adjustment policy for the CPU is to reduce the operating frequency of the CPU by a first step or to take a first quantity of CPU cores offline. When the first level is normal, the power consumption controller may determine that the power consumption adjustment policy for the CPU is to reduce the operating frequency of the CPU by a second step or to take a second quantity of CPU cores offline. The first quantity is greater than the second quantity, and the first step is greater than the second step. For example, the first quantity may be 2, the second quantity may be 1, the first step may be 2 step units, and the second step may be 1 step unit.

If the degree of busyness is a second level, and the degree of overload is also a second level, the power consumption controller may determine that the power consumption adjustment policy for the CPU is to bring a CPU core of the CPU online or to increase an operating frequency of the CPU. The second level of the degree of busyness may include slightly busy or severely busy, and the second level of the degree of overload may include moderately overloaded or severely overloaded.

When the degree of busyness is severely busy, and the degree of overload is moderately overloaded or severely overloaded, the power consumption controller may determine that the power consumption adjustment policy for the CPU is to bring a maximum quantity of CPU cores (namely, all CPU cores) of the CPU online, and to increase the operating frequency of the CPU to a maximum operating frequency.

When the degree of busyness is slightly busy, and the degree of overload is moderately overloaded, the power consumption controller may determine that the power consumption adjustment policy for the CPU is to bring a first proportion of offline CPU cores online or to increase the operating frequency of the CPU by a third step. When the degree of busyness is slightly busy, and the degree of overload is severely overloaded, the power consumption controller may determine that the power consumption adjustment policy for the CPU is to bring a second proportion of offline CPU cores online or to increase the operating frequency of the CPU by a fourth step. The first proportion is less than the second proportion, and the third step is less than the fourth step. For example, the first proportion may be 1/4, the second proportion may be 1/2, the first step may be 8 step units, and the second step may be 16 step units.

In some possible implementations, if the degree of overload is a first level, for example, normally loaded or slightly overloaded, and the degree of busyness is the second level, for example, slightly busy or severely busy, the power consumption adjustment policy for the CPU may be to maintain a previous operating mode.

S404 to S414 are some specific implementations in which the power consumption controller determines, based on the training phase of the AI model, the power consumption adjustment policy for the CPU. In another possible implementation of this embodiment of this application, the power consumption adjustment policy for the CPU may be determined in another manner. This is not limited in this embodiment.

S416: The power consumption controller adjusts the operating mode of the CPU according to the power consumption adjustment policy.

Specifically, the power consumption controller may provide a setting interface. The setting interface is configured to set an operating mode, for example, set a mode parameter of the operating mode. The power consumption controller may complete adjustment or switching of the operating mode through the setting interface. For example, the power consumption controller may determine the mode parameter of the operating mode according to the power consumption adjustment policy, and then set, through the setting interface, the mode parameter of the operating mode to a mode parameter determined according to the power consumption adjustment policy.

Further, to ensure security and reliability, the power consumption controller may first back up a current operating mode of the CPU, for example, back up a mode parameter of the current operating mode, and then adjust or switch the operating mode of the CPU through the setting interface.

Based on the foregoing content descriptions, it can be learned that, in the power consumption control method in this application, the processing phase of the AI model in the AI server may be obtained, the power consumption adjustment policy corresponding to the processing phase may be determined based on the processing phase of the AI model, and the operating mode of the CPU may be adaptively adjusted according to the power consumption adjustment policy. In this way, the power consumption of the CPU in the AI server can be reduced while performance is ensured, thereby implementing energy consumption optimization for the CPU. Further, when the processing phase of the AI model is the stable training phase or the validation phase, the operating mode of the CPU may be determined based on the state of the accelerator processor, that is, the operating mode of the CPU in the AI server is coordinated with the state of the accelerator processor, allowing the power consumption of the CPU in the AI server in the training process to be reduced by merely observing external characteristics of the accelerator processor, without directly sensing a service, thereby implementing energy consumption optimization for the CPU.

In the embodiment shown in FIG. 4, the power consumption control method for an AI server provided in this application is mainly described in a model training scenario. The power consumption control method for an AI server provided in this application may also be applied to a model inference scenario. A main difference between the model inference scenario and the model training scenario lies in that at least two processing phases included in the AI model may be an idle phase, an inference startup phase, or a stable inference phase. The inference startup phase or the stable inference phase may alternatively be classified as an inference phase, for example, an inference in progress phase or an inference running phase. The power consumption controller may obtain the processing phase of the AI model in the model inference scenario in a manner similar to that of obtaining the processing phase in the model training scenario. Then, the power consumption controller determines, based on the processing phase of the AI model, a power consumption adjustment policy for the CPU. When the processing phase is the idle phase or the inference startup phase, for specific implementation of determining the power consumption adjustment policy by the power consumption controller, refer to specific implementation of determining the power consumption adjustment policy by the power consumption controller when the processing phase is the idle phase or the training startup phase. When the processing phase is the stable inference phase, for specific implementation of determining the power consumption adjustment policy by the power consumption controller, refer to specific implementation of determining the power consumption adjustment policy by the power consumption controller when the processing phase is the stable training phase or the validation phase. Details are not described herein again.

For ease of understanding, this application further provides an example for description. In this example, a quantity of CPU cores of the CPU is 64, that is, the CPU is a 64-core CPU. A minimum quantity of CPU cores in an active state (active cores) in the CPU is 8, and a maximum quantity of CPU cores in the active state is 64.

When the power consumption controller determines, based on the utilization of the accelerator processor, that the AI model is in the stable training phase or the validation phase, if the difference between the utilization of the accelerator processor and the previous utilization of the accelerator processor is less than -10%, the operating mode of the CPU is restored to the previous operating mode; otherwise, the operating mode of the CPU in this phase is determined in the following manner.

When the difference between the temperature of the accelerator processor and the preset limit is less than -2°C, the power consumption controller may adjust the operating mode of the CPU according to the power consumption adjustment policy in the following table.

**Table 1 Power consumption adjustment policy for CPU**

| Power consumption adjustment policy for CPU | | Degree of busyness of CPU | | | |
|---|---|---|---|---|---|
| | | Idle [0%, 5%) | Normal [5%, 75%) | Slightly busy [75%, 95) | Severely busy [95%, 100%] |
| Degree of overload of CPU | Normally loaded [0, 0.7] | If a quantity of remaining active cores is greater than 8, take 2 active cores of the CPU offline until only 8 active cores are left; otherwise, adjust an operating frequency of the CPU twice until a minimum operating frequency is reached ① | If the quantity of remaining active cores is greater than 8, take 1 active core of the CPU offline until only 8 active cores are left; otherwise, adjust the operating frequency of the CPU once until the minimum operating frequency is reached ② | Maintain a previous operating mode unchanged ③ | Same as ③ |
| | Slightly overloaded (0.7, 1] | Same as ① | Same as ② | Same as ③ | Same as ③ |
| | Moderately overloaded (1, 5] | Same as ① | Same as ② | Increase the operating frequency 8 times until a maximum operating frequency is reached; and if the maximum operating frequency is reached, bring 1/4 of offline CPU cores online at once until a maximum quantity of available cores is reached | Bring all CPU cores online, and run the CPU at the maximum operating frequency ④ |
| | Severely overloaded > 5 | Same as ① | Same as ② | Increase the operating frequency 16 times until the maximum operating frequency is reached; and if the maximum operating frequency is reached, bring 1/2 of offline CPU cores online at once until the maximum quantity of available cores is reached | Same as ④ |

When the difference between the temperature of the accelerator processor and the preset limit is less than 0, it indicates that the temperature is about to exceed the limit, and the power consumption controller may maintain the current operating mode of the CPU unchanged.

The foregoing describes specific implementation of adjusting the operating mode of the CPU by the power consumption controller in the stable training phase and the validation phase. The following describes specific implementation of adjusting the operating mode of the CPU by the power consumption controller in the idle phase and the training startup phase.

When the power consumption controller determines, based on the utilization of the accelerator processor, that the AI model is in the idle phase or the training startup phase, if the difference between the load of the CPU and the previous load of the CPU is greater than 2, the operating mode of the CPU is adjusted to bring all the CPU cores online, and run the CPU at the maximum operating frequency; otherwise, the operating mode of the CPU in this phase is determined in the following manner.

**Table 2 Power consumption adjustment policy for CPU**

| Power consumption adjustment policy for CPU | | Degree of busyness of CPU | | | |
|---|---|---|---|---|---|
| | | Idle [0%, 5%) | Normal [5%, 75%) | Slightly busy [75%, 95) | Severely busy [95%, 100%] |
| Degree of overload of CPU | Normally loaded [0, 0.7] | Reduce an operating frequency of the CPU twice; and if a minimum operating frequency is reached, take 2 CPU cores offline until at least 8 active cores of the CPU remain active ① | Reduce the operating frequency of the CPU once; and if the minimum operating frequency is reached, take 1 active core offline until at least 8 active cores of the CPU remain active ② | Maintain a previous operating mode unchanged ③ | Same as ③ |
| | Slightly overloaded (0.7, 1] | Same as ① | Same as ② | Same as ③ | Same as ③ |
| | Moderately overloaded (1, 5] | Same as ① | Same as ② | Bring 1/4 of offline CPU cores online at once; and if a maximum quantity of available cores is reached, increase the operating frequency 8 times until a maximum operating frequency is reached | Bring all CPU cores online, and run the CPU at the maximum operating frequency ④ |
| | Severely overloaded > 5 | Same as ① | Same as ② | Bring 1/2 of the offline CPU cores online at once; and if the maximum quantity of available cores is reached, increase the operating frequency 16 times until the maximum operating frequency is reached | Same as ④ |

It can be learned from the foregoing table that a policy for adjusting the operating mode by the power consumption controller is slow downward adjustment and fast upward adjustment. It should be further noted that, when the CPU core is taken offline or the operating frequency is reduced, the foregoing table provides an example in which the operating frequency is adjusted first and then the quantity of CPU cores is adjusted for description; and when the CPU core is brought online or the operating frequency is increased, the foregoing table provides an example in which the quantity of CPU cores is adjusted first and then the operating frequency is adjusted for description. In actual application, when the CPU core is taken offline or the operating frequency is reduced, the power consumption controller may alternatively prioritize adjusting the quantity of CPU cores, and then consider adjusting the operating frequency. When the CPU core is brought online or the operating frequency is increased, the power consumption controller may alternatively prioritize adjusting the operating frequency, and then consider adjusting the quantity of CPU cores.

It should be noted that the power consumption controller determines, based on a collected indicator, the power consumption adjustment policy for the CPU, and the determining process may be periodic, or may be triggered by a change in the indicator. This is not limited in this embodiment.

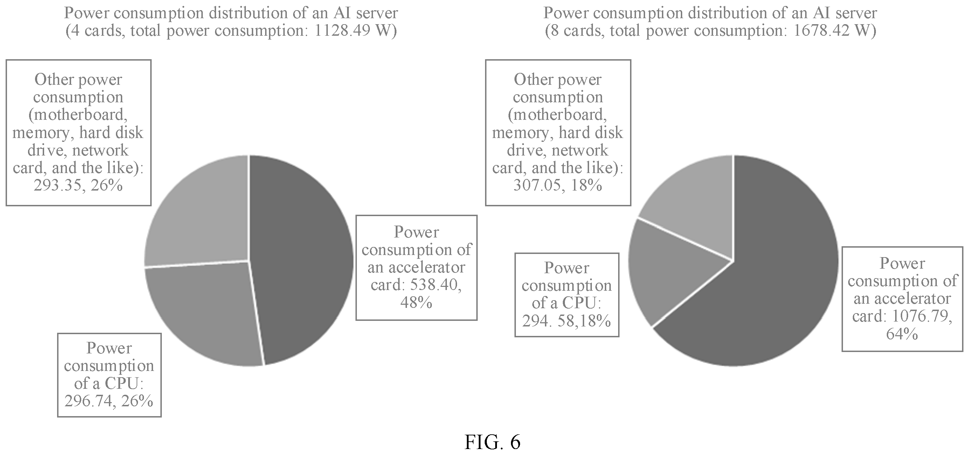

To verify technical effects of the technical solutions in this application, a related experiment is further designed for verification. An example of power consumption control in a large model training process using an AI server including four accelerator processors (briefly referred to as four cards) and an AI server including eight accelerator processors (briefly referred to as eight cards) is used for description. In this example, a power consumption controller may obtain load, utilization, or temperature of an accelerator processor in the AI server, and determine, based on the load, utilization, or temperature of the accelerator processor, a processing phase of an AI model in the AI server. When the processing phase of the AI model is a stable training phase or a validation phase, if a difference between the temperature of the accelerator processor and a preset limit is less than -2°C, the power consumption controller may adjust an operating mode of a CPU according to the power consumption adjustment policy in Table 1. When the processing phase of the AI model is a training startup phase or an idle phase, if a difference between current average load of the CPU and previous average load of the CPU is less than or equal to 2, the power consumption controller may adjust the operating mode of the CPU according to the power consumption adjustment policy in Table 2. FIG. 6 further shows power consumption distribution of an AI server. The power consumption of the CPU may account for more than 20% of the total. If the technical solution in this application is used for optimization, the power consumption may be reduced by approximately 5%, yielding significant benefits.

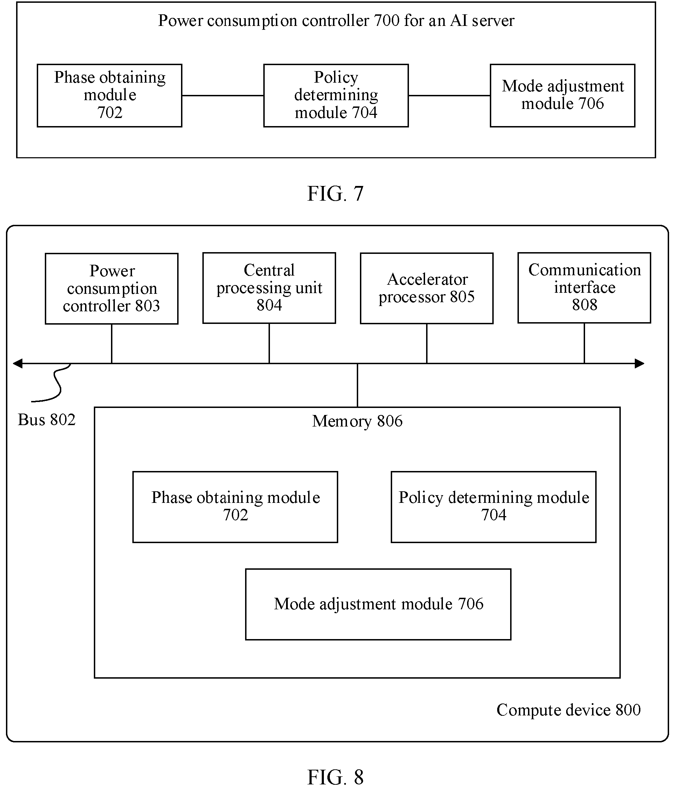

Based on the foregoing power consumption control method, this application further provides a power consumption controller. The following describes the power consumption controller from a perspective of functional modularization. As shown in FIG. 7, the power consumption controller 700 includes:
a phase obtaining module 702, configured to obtain a processing phase of an AI model in an AI server, where the AI model includes at least two processing phases, the AI server includes a CPU and an accelerator processor, the accelerator processor is configured to train the AI model or perform inference using the AI model, and the CPU is configured to control the accelerator processor to perform AI model training or inference;
a policy determining module 704, configured to determine, based on the processing phase of the AI model, a power consumption adjustment policy for the CPU; and
a mode adjustment module 706, configured to adjust an operating mode of the CPU according to the power consumption adjustment policy.

The phase obtaining module 702 is configured to implement related content descriptions of S402 in the embodiment shown in FIG. 4. The policy determining module 704 is configured to implement related content descriptions of S404 to S414 in the embodiment shown in FIG. 4. The mode adjustment module 706 is configured to implement related content descriptions of S416.

For example, the phase obtaining module 702, the policy determining module 704, and the mode adjustment module 706 may be implemented by using hardware or software.

When implemented by using software, the phase obtaining module 702, the policy determining module 704, and the mode adjustment module 706 may be application programs run on a computer device, for example, a computing engine. The application program may be provided, in a form of a virtualization service, for a user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, procedures, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by using hardware, the phase obtaining module 702, the policy determining module 704, and the mode adjustment module 706 may include at least one compute device, for example, a server. Alternatively, the phase obtaining module 702, the policy determining module 704, and the mode adjustment module 706 may be devices implemented by using an application-specific integrated circuit (application-specific integrated circuit, ASIC) or a programmable logic device (programmable logic device, PLD). The PLD may be implemented by using a complex programmable logic device (complex programmable logic device, CPLD), a field-programmable gate array (field-programmable gate array, FPGA), generic array logic (generic array logic, GAL), or any combination thereof.

In some possible implementations, the phase obtaining module 702 is specifically configured to:
obtain the processing phase of the AI model reported by the CPU or the accelerator processor; or
obtain a state of the accelerator processor, and determine, based on the state of the accelerator processor, the processing phase of the AI model.

In some possible implementations, when the AI model is a training model, the processing phase includes an idle phase, a training startup phase, a stable training phase, or a validation phase; or when the AI model is an inference model, the processing phase includes an idle phase, an inference startup phase, or a stable inference phase.

In some possible implementations, the policy determining module 704 is specifically configured to:
when the processing phase is the stable training phase or the validation phase, or when the processing phase is the stable inference phase, obtain the state of the accelerator processor; and
determine, based on the state of the accelerator processor, the power consumption adjustment policy for the CPU.

In some possible implementations, the policy determining module 704 is specifically configured to:
when it is determined that the state of the accelerator processor is a first state, determine, based on the first state, that the power consumption adjustment policy for the CPU is a first policy; or
when it is determined that the state of the accelerator processor is a state other than the first state, obtain a state of the CPU, where the CPU includes a plurality of states, and determine, based on the state of the CPU, that the power consumption adjustment policy for the CPU is a second policy.

In some possible implementations, the policy determining module 704 is specifically configured to:
when the processing phase is the idle phase or the training startup phase, or when the processing phase is the idle phase or the inference startup phase, obtain the state of the CPU; and
determine the power consumption adjustment policy for the CPU based on the state of the CPU.

In some possible implementations, the state of the CPU is classified based on load of the CPU and a degree of busyness of the CPU, the load indicates a quantity of tasks executed by the CPU per unit time, and the degree of busyness indicates utilization of the CPU during task execution.

In some possible implementations, the power consumption controller is deployed in the AI server, or the power consumption controller is deployed in a control server outside the AI server. The power consumption controller is deployed in the AI server, so that a communication link can be shortened, and communication latency can be reduced, thereby implementing timely adjustment of the operating mode of the CPU, to meet a power consumption optimization requirement. The power consumption controller is deployed in a control server outside the AI server, so that one control server can perform unified power consumption control on a plurality of AI servers. In this way, complexity of the AI server can be reduced, and robustness can be improved. In addition, a cost increase caused by deploying the power consumption controller in each AI server can be avoided.

This application further provides a compute device 800. The compute device 800 may be an AI server, and is configured to perform model training or model inference. As shown in FIG. 8, the compute device 800 includes a bus 802, a power consumption controller 803, a central processing unit 804, an accelerator processor 805, a memory 806, and a communication interface 808. The processing unit 804, the accelerator processor 805, the memory 806, and the communication interface 808 communicate with each other through the bus 802. It should be understood that a quantity of processors and memories in the compute device 800 is not limited in this application.

The bus 802 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 8. However, it does not indicate that there is only one bus or only one type of bus. The bus 802 may include a path for transmitting information between components (for example, the memory 806, the central processing unit 804, the accelerator processor 805, and the communication interface 808) of the compute device 800.

The power consumption controller 803 is an important component for implementing power consumption optimization in the compute device 800, and a function of the power consumption controller 803 is to optimize power consumption of the AI server, for example, optimize power consumption of the central processing unit 804 (or referred to as a CPU) in the AI server. The power consumption controller 803 may include a processor and a memory. The memory may store instructions of the phase obtaining module 702, the policy determining module 704, and the mode adjustment module 706 that are shown in FIG. 7, and the processor reads the instructions, to implement a power consumption control method for an AI server.

The central processing unit 804 is one of main components of the compute device 800, and a function of the central processing unit 804 is mainly to interpret computer instructions and process data in computer software. The central processing unit 804 may include a plurality of instruction set architectures. The instruction set architecture may also be briefly referred to as an architecture, and defines an instruction set, a register, a data type, an address mode, exception handling, and the like that are supported by the CPU. The architecture of the CPU determines functionality, performance, compatibility, and energy efficiency of the CPU.

The accelerator processor 805 is another main component of the compute device 800, and may be a processing unit that assists a conventional central processing unit in processing a special type of compute task. The special compute task may be graphics processing, vector computing, or the like. The accelerator processor 805 is also referred to as an accelerator or an accelerator card, and includes but is not limited to any one or more of processors such as a graphics processing unit (graphics processing unit, GPU), a neural-network processing unit (Neural-Network Processing Unit, NPU), and a tensor processing unit (tensor processing unit, TPU). Processing units such as the CPU, the GPU, the NPU, and the TPU may be collectively referred to as an XPU.

The memory 806 may include a volatile memory (volatile memory), for example, a random access memory (random access memory, RAM). The memory 806 may further include a non-volatile memory (non-volatile memory), for example, a read-only memory (read-only memory, ROM), a flash memory, a mechanical hard disk drive (hard disk drive, HDD), or a solid-state drive (solid-state drive, SSD). The memory 806 stores executable program code, and the processing unit 804 executes the executable program code to implement the power consumption control method. Specifically, the memory 806 stores instructions used by the power consumption controller 803 to perform the power consumption control method.

The communication interface 808 uses a transceiver module, for example, but not limited to, a network interface card or a transceiver, to implement communication between the compute device 800 and another device or a communication network.

An embodiment of this application further provides a compute device cluster. The compute device cluster includes at least one compute device. The compute device may be the AI server shown in FIG. 8. Correspondingly, the compute device cluster may be an AI cluster.

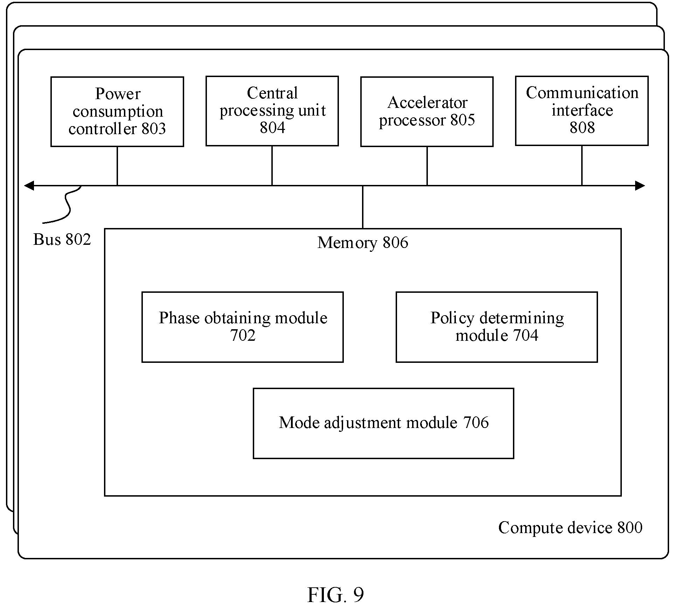

As shown in FIG. 9, the compute device cluster includes at least one compute device 800. The memory 806 in one or more compute devices 800 in the compute device cluster may store same instructions used by the power consumption controller to perform the power consumption control method.

In some possible implementations, one or more compute devices 800 in the compute device cluster may also be configured to execute some instructions used by the power consumption controller to execute the power consumption control method. In other words, a combination of one or more compute devices 800 may jointly execute the instructions used by the power consumption controller to perform the power consumption control method.

It should be noted that memories 806 in different compute devices 800 in the compute device cluster may store different instructions, to perform some functions of the power consumption controller.

FIG. 8 and FIG. 9 are described by using an example in which the power consumption controller is disposed inside the AI server. In another possible implementation of this embodiment of this application, the power consumption controller may alternatively be independent of the AI server. Based on this, this application further provides a power consumption controller. The power consumption controller may include a processor and a memory. The memory may store instructions of the phase obtaining module 702, the policy determining module 704, and the mode adjustment module 706 that are shown in FIG. 7, and the processor reads the instructions, to implement a power consumption control method for an AI server.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the foregoing power consumption control method applied to a power consumption controller.

An embodiment of this application further provides a computer program product including instructions. The computer program product may be software or a program product that includes the instructions and that can run on a compute device or can be stored in any usable medium. When the computer program product runs on at least one compute device, the at least one compute device is caused to perform the foregoing power consumption control method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A power consumption control method for an artificial intelligence AI server, wherein the method comprises:
obtaining a processing phase of an AI model in the AI server, wherein the AI model comprises at least two processing phases, the AI server comprises a central processing unit CPU and an accelerator processor, the accelerator processor is configured to train the AI model or perform inference using the AI model, and the central processing unit is configured to control the accelerator processor to perform AI model training or inference;
determining, based on the processing phase of the AI model, a power consumption adjustment policy for the CPU; and
adjusting an operating mode of the CPU according to the power consumption adjustment policy.

2. The method according to claim 1, wherein the obtaining the processing phase of the AI model in the AI server comprises:
obtaining the processing phase of the AI model reported by the CPU or the accelerator processor; or
obtaining a state of the accelerator processor, and determining, based on the state of the accelerator processor, the processing phase of the AI model.

3. The method according to claim 1 or 2, wherein when the AI model is a training model, the processing phase comprises an idle phase, a training startup phase, a stable training phase, or a validation phase; or when the AI model is an inference model, the processing phase comprises an idle phase, an inference startup phase, or a stable inference phase.

4. The method according to any one of claims 1 to 3, wherein when the processing phase is the stable training phase or the validation phase, or when the processing phase is the stable inference phase, the determining, based on the processing phase of the AI model, the power consumption adjustment policy for the CPU comprises:
obtaining the state of the accelerator processor; and
determining, based on the state of the accelerator processor, the power consumption adjustment policy for the CPU.

5. The method according to claim 4, wherein the determining, based on the state of the accelerator processor, the power consumption adjustment policy for the CPU comprises:
when it is determined that the state of the accelerator processor is a first state, determining, based on the first state, that the power consumption adjustment policy for the CPU is a first policy; or
when it is determined that the state of the accelerator processor is a state other than the first state, obtaining a state of the CPU, wherein the CPU comprises a plurality of states, and determining, based on the state of the CPU, that the power consumption adjustment policy for the CPU is a second policy.

6. The method according to any one of claims 1 to 5, wherein when the processing phase is the idle phase or the training startup phase, or when the processing phase is the idle phase or the inference startup phase, the determining, based on the processing phase of the AI model, the power consumption adjustment policy for the CPU comprises:
obtaining the state of the CPU; and
determining, based on the state of the CPU, the power consumption adjustment policy for the CPU.

7. The method according to claim 5 or 6, wherein the state of the CPU is classified based on load of the CPU and a degree of busyness of the CPU, the load indicates a quantity of tasks executed by the CPU per unit time, and the degree of busyness indicates utilization of the CPU during task execution.

8. A power consumption controller for an artificial intelligence AI server, wherein the power consumption controller comprises:
a phase obtaining module, configured to obtain a processing phase of an AI model in the AI server, wherein the AI model comprises at least two processing phases, the AI server comprises a central processing unit CPU and an accelerator processor, the accelerator processor is configured to train the AI model or perform inference using the AI model, and the central processing unit is configured to control the accelerator processor to perform AI model training or inference;
a policy determining module, configured to determine, based on the processing phase of the AI model, a power consumption adjustment policy for the CPU; and
a mode adjustment module, configured to adjust an operating mode of the CPU according to the power consumption adjustment policy.

9. The power consumption controller according to claim 8, wherein the phase obtaining module is specifically configured to:
obtain the processing phase of the AI model reported by the CPU or the accelerator processor; or
obtain a state of the accelerator processor, and determine, based on the state of the accelerator processor, the processing phase of the AI model.

10. The power consumption controller according to claim 8 or 9, wherein when the AI model is a training model, the processing phase comprises an idle phase, a training startup phase, a stable training phase, or a validation phase; or when the AI model is an inference model, the processing phase comprises an idle phase, an inference startup phase, or a stable inference phase.

11. The power consumption controller according to any one of claims 8 to 10, wherein the policy determining module is specifically configured to:
when the processing phase is the stable training phase or the validation phase, or when the processing phase is the stable inference phase, obtain the state of the accelerator processor; and
determine, based on the state of the accelerator processor, the power consumption adjustment policy for the CPU.

12. The power consumption controller according to claim 11, wherein the policy determining module is specifically configured to:
when it is determined that the state of the accelerator processor is a first state, determine, based on the first state, that the power consumption adjustment policy for the CPU is a first policy; or
when it is determined that the state of the accelerator processor is a state other than the first state, obtain a state of the CPU, wherein the CPU comprises a plurality of states, and determine, based on the state of the CPU, that the power consumption adjustment policy for the CPU is a second policy.

13. The power consumption controller according to any one of claims 8 to 11, wherein the policy determining module is specifically configured to:
when the processing phase is the idle phase or the training startup phase, or when the processing phase is the idle phase or the inference startup phase, obtain the state of the CPU; and
determine, based on the state of the CPU, the power consumption adjustment policy for the CPU.

14. The power consumption controller according to claim 12 or 13, wherein the state of the CPU is classified based on load of the CPU and a degree of busyness of the CPU, the load indicates a quantity of tasks executed by the CPU per unit time, and the degree of busyness indicates utilization of the CPU during task execution.

15. The power consumption controller according to any one of claims 8 to 14, wherein the power consumption controller is deployed in the AI server, or the power consumption controller is deployed in a control server outside the AI server.

16. An artificial intelligence AI server, wherein the AI server comprises a central processing unit CPU, an accelerator processor, and a power consumption controller, and the power consumption controller executes computer-readable instructions to cause the AI server to perform the power consumption control method for an AI server according to any one of claims 1 to 7.

17. A computer-readable storage medium, comprising computer-readable instructions, wherein the computer-readable instructions are used to implement the power consumption control method for an AI server according to any one of claims 1 to 7.

18. A computer program product, comprising computer-readable instructions, wherein the computer-readable instructions are used to implement the power consumption control method for an AI server according to any one of claims 1 to 7.
